(19) Europäisches Patentamt
European Patent Office
Office européen des brevets

(11) **EP 0 957 243 B1**

(12) **EUROPÄISCHE PATENTSCHRIFT**

(45) Veröffentlichungstag und Bekanntmachung des Hinweises auf die Patenterteilung:
**31.07.2002 Patentblatt 2002/31**

(51) Int Cl.⁷: **F01N 3/08**, F01N 3/20

(21) Anmeldenummer: **99101729.4**

(22) Anmeldetag: **10.02.1999**

(54) **Stickoxidbehandlung bei einem Mager-Otto-Motor**

Treatment of nitrogen oxide at an Otto engine supplied with a lean mixture

Traitement d'oxydes d'azote dans un moteur Otto alimenté par un mélange pauvre

(84) Benannte Vertragsstaaten:
**DE ES FR GB IT SE**

(30) Priorität: **20.02.1998 DE 19807203**

(43) Veröffentlichungstag der Anmeldung:
**17.11.1999 Patentblatt 1999/46**

(73) Patentinhaber: **Volkswagen Aktiengesellschaft
38436 Wolfsburg (DE)**

(72) Erfinder:
• **König, Axel, Dr.
38448 Wolfsburg (DE)**
• **Standt, Ulrich-Dieter, Dr.
38527 Meine (DE)**

(56) Entgegenhaltungen:
**EP-A- 0 627 548      EP-A- 0 688 940
EP-A- 0 886 042      DE-A- 4 334 763
DE-A- 19 522 165**

**Beschreibung**

Der Erfindung betrifft ein Verfahren und eine Vorrichtung zur Behandlung von Stickoxiden bei einem Mager-Otto-Motor entsprechend dem Oberbegriff der Ansprüche 1 und 3.

Bei Mager-Otto-Motoren entsteht im Abgasstrom aufgrund der mageren Brennbedingungen Stickoxide NOx, die wegen ihrer schädlichen Umweltrelevanz reduziert werden müssen, d. h. der Abgasstrom wird einer Behandlung zur Säuberung des Abgases unterzogen.

Zur Entstickung eines mageren Abgases sind prinzipiell die folgenden Abgasbehandlungsverfahren einsetzbar, die mit mehr oder weniger Nachteilen behaftet sind.

Bei der Minderung der NOx-Emission durch Abgasrückführung (Exhaust Gas Recirculation, EGR) wird das Abgas zumindest teilweise in das Ansaugrohr vor dem Brennraum zurückgeführt, was zu einer Senkung der Brennraumtemperatur und Erhöhung des Inertgasanteiles in der Ansaugluft führt. Die Einsatzmöglichkeiten sind durch eine vorgegebene Rückführrate begrenzt, wobei ferner eine nachteilige Versottung des Ansaugtraktes auftreten kann.

Es können kontinuierlich arbeitende Katalysatoren auf Zeolith-Basis zur NOx-Reduktion verwendet werden. Dabei ist nachteilig, daß die Zeolithe bei erhöhter Temperatur eine mangelnde Haltbarkeit zeigen. Ferner ist die $SO_2$-Verträglichkeit und die Selektivität der Zeolithe gering, im Fall von edelmetallhaltigen Zeolithen ist der Temperaturbereich der NOx-Reduktion relativ schmal und bei edelmetallfreien Zeolithen werden relativ hohe Anspringtemperaturen für die Reduktion des NOx benötigt.

Ferner können NOx-Speicherkatalysatoren eingesetzt werden wie z.B. aus EP-A-0627548 bekannt, wobei der NOx-Speicher des Katalysators während des Mager-Betriebs des Motors das NOx speichert und es während eines Fett-Betriebs des Motors abgibt, so daß es im Katalysatorabschnitt aufgrund des fetten Abgases reduziert wird. Probleme von NOx-Speicherkatalysatoren sind deren begrenzte Haltbarkeit bei erhöhter Temperatur und der relativ enge Bereich der NOx-Einspeicherung, der zwischen 200°C und 500°C liegt und damit den Temperaturbereich des Katalysators bei dem Magerbetrieb des Motors vorgibt.

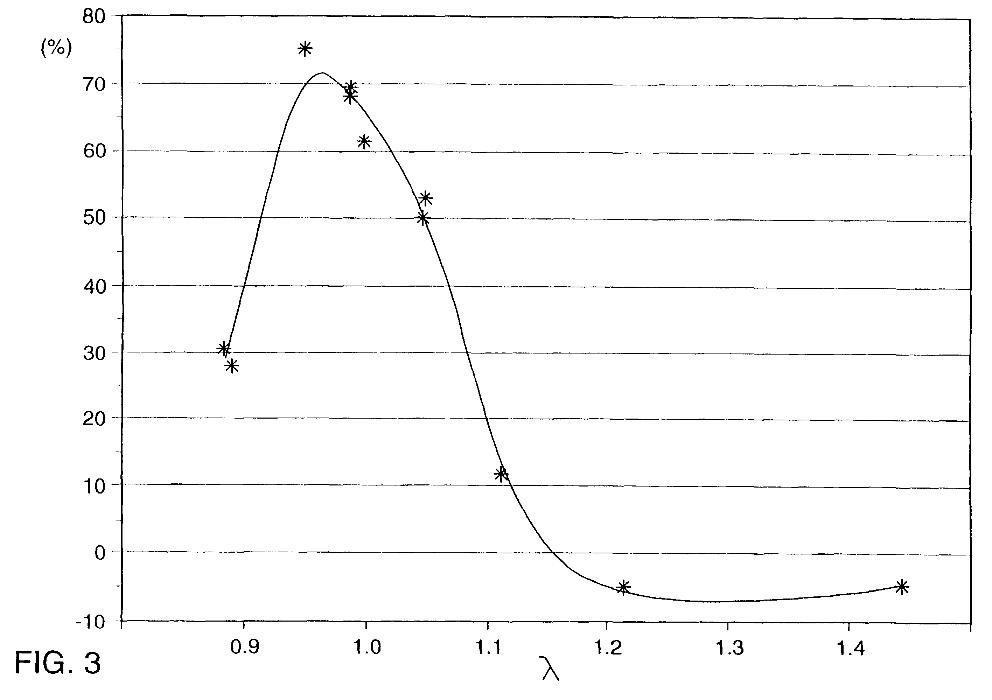

Ein weiterer Vorschlag der NOx-Reinigung basiert auf der bereits erwähnten Rückführung des Abgases in den Brennraum, wobei während des Magerbetriebs das NOx in einem NOx-Speicher zwischengespeichert wird und in das Ansaugrohr zurückgeführt wird, wenn der NOx-Speicher regeneriert werden muß. Nachteilig bei diesem Verfahren ist, daß das mögliche Fenster der motorischen Umsetzung des NOx relativ eng auf den Bereich um λ = 1 begrenzt ist. Das ist in der Fig. 3 dargestellt, die eine Messung des NO-Umsatzes als Funktion von λ bei einem Magermotor zeigt, dem das NOx-haltige Abgas über das Ansaugrohr wieder zugeführt wurde. Es ist deutlich zu erkennen, daß der prozentuale NO-Umsatz nur in einem engen Bereich um λ = 1 wirksam ist. Bei der Meßkurve der Fig. 3 ist anzumerken, daß die Kurve nicht exakt bezüglich eines NO-Umsatzes von 0 kalibriert ist, was aber für die oben getroffene Aussage bedeutungslos ist.

Der Erfindung liegt daher die Aufgabe zugrunde, ein Verfahren und eine Vorrichtung zu entwickeln, die eine einfache Abgasnachbehandlung des NOx ermöglicht.

Die Aufgabe wird durch die Merkmale der Ansprüche 1 und 3 gelöst. Bevorzugte Ausgestaltungen der Erfindung sind Gegenstand der Unteransprüche.

In dem erfindungsgemäßen Verfahren zur NOx-Behandlung des Abgases eines Mager-Otto-Motors, wobei die Abgasbehandlungsanlage des Motors aus einem NOx-Speicher und einem davon unabhängigen Katalysator besteht, wird während des Magerbetriebs des Motors das entstandene NOx in dem NOx-Speicher gespeichert, für die Regenerationsphase des NOx-Speichers, d.h. wenn der NOx-Speicher voll oder fast voll ist, wird der Motor auf ein Kraftstoff-Luft-Verhältnis von ungefähr λ = 1 geschaltet, das durch die damit verbundene Temperaturerhöhung des Abgases freigesetzte NOx des NOx-Speichers wird stromabwärts des NOx-Speichers abgegriffen und das NOx-beaufschlagte Abgas wird zumindest teilweise zurück in den Katalysator geleitet, wobei der Katalysator unmittelbar hinter dem Motor und vor dem NOx-Speicher angeordnet ist.

Ferner kann während der Regenerationsphase das Abgas nach Durchlaufen des Katalysators zumindest teilweise um den NOx-Speicher herum geleitet werden.

Die erfindungsgemäße Vorrichtung zur NOx-Behandlung des Abgases eines Mager-Otto-Motors umfaßt einen NOx-Speicher, einen davon unabhängigen Katalysator, wobei der Katalysator unmittelbar hinter dem Motor und der NOx-Speicher stromabwärts des Katalysators angeordnet ist, und eine Rückführleitung, die stromabwärts des NOx-Speichers von dem Abgasstrang der Abgasanlage abzweigt und stromaufwärts des Katalysators in den Abgasstrang wieder einkoppelt, so daß im Regenerationsbetrieb des NOx-Speichers das aus dem NOx-Speicher austretende, NOx-behaftete Abgas zumindest teilweise in den Katalysator geleitet wird.

Vorteilhafterweise erfolgt die Einkopplung des NOx-behafteten Abgases in den Katalysator über eine Düse, wobei die Düse eine Venturi-Düse sein kann.

Vorteilhafterweise ist die Druckdifferenz $\Delta p_V$ in der Venturi-Düse größer als die partiellen Druckdifferenzen $\Delta p_1$ des Katalysators und $\Delta p_2$ des NOx-Speichers.

Vorzugsweise ist in der das Abgas in den Katalysator leitenden Rückführleitung ein Ventil angeordnet.

Ferner kann die Vorrichtung einen Bypass aufweisen, der während der Regenerationsphase des NOx-Speichers das Abgas teilweise um den NOx-Speicher herum in das Abgasendrohr leitet. Der Bypass wird mittels eines zwischen dem Katalysator und dem NOx-Speicher angeordneten Abgasschaltventils in den Abgasstrom eingeschaltet, wobei vorzugsweise der größere Teil des Abgases um den NOx-Speicher herum in das Abgasendrohr geleitet wird und der kleinere Teil des Abgases durch den NOx-Speicher strömt.

Vorteilhafterweise braucht das Abgas während der Regenerationsphase nicht wie bei einem ERG-Verfahren in den Verbrennungsraum zurückgeführt zu werden, was das Leistungsverhalten des Motors beeinflußt, sondern es reicht aus, das NOx-behaftete Abgas direkt in den unmittelbar nach dem Motor angeordneten Katalysator zu leiten. Ferner sind NOx-Speicher und Katalysator nicht im selben Gehäuse angeordnet, wobei die Anordnung in einem gemeinsamen Gehäuse die schlechtere Haltbarkeit des NOx-Speichermaterials bewirken kann. Die Entkoppelung von Katalysator und NOx-Speicher bewirkt ferner auch eine Erweiterung des Temperaturbereichs des Magerbetriebs, da der NOx-Speicher weiter stromabwärts im Abgassystem angeordnet ist. Der Katalysator kann direkt am Auslaßkrümmer des Motors angebracht werden, so daß es auch möglich sein wird, die höhertemperaturfesten 3-Wege-Katalysatoren motornah anzubringen. Ferner wird durch die motornahe Anbringung des Katalysators ein schnelleres Anspringen des Katalysators erreicht, was für das Durchführen zukünftiger Abgaskonzepte wichtig sein könnte.

Bevorzugte Ausführungsformen der Erfindung werden nachfolgend anhand der Zeichnungen erläutert.

Fig. 1 zeigt eine schematische Darstellung einer ersten Ausführungsform der Erfindung,

Fig. 2 zeigt eine schematische Darstellung einer zweiten Ausführungsform der Erfindung, und

Fig. 3 zeigt ein Meßergebnis des NOx-Umsatzvermögens eines Magermotors als Funktion von λ.

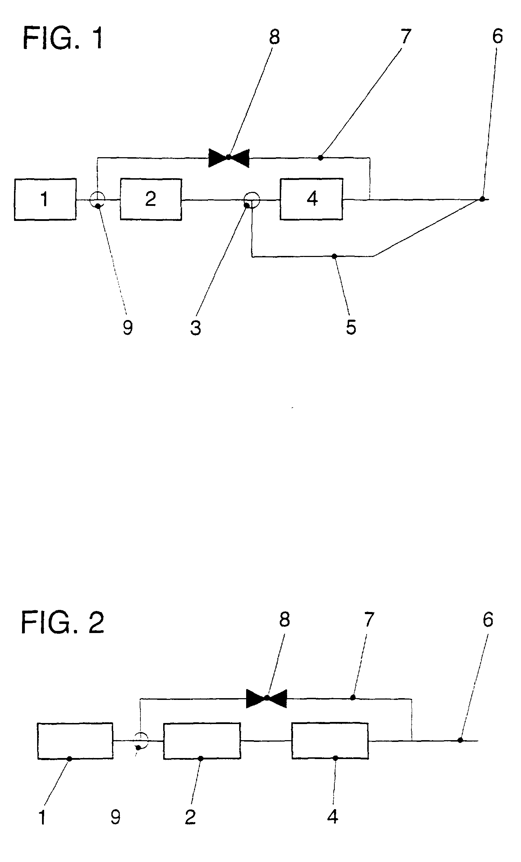

Fig. 1 zeigt die schematische Darstellung einer ersten Ausführungsform einer Abgasanlage. Direkt hinter einem Motor 1 ist ein 3-Wege-Katalysator 2 angeordnet. Hinter dem Katalysator 2 befindet sich in stromabwärtiger Abgasrichtung ein Abgasschaltventil 3 vor einem NOx-Speicher 4. Im mageren Betrieb nimmt der NOx-Speicher 4 die Stickoxide auf, bis er am Ende seines Speichervermögens angelangt ist. Zur Regeneration des NOx-Speichers 4 schaltet der Motor 1 kurzfristig (leistungsgleich) auf ein Luft-Kraftstoffverhältnis λ von ungefähr 1 um. Diese Umschaltung bewirkt eine Temperaturerhöhung des Abgases und dadurch eine Freisetzung des gespeicherten NOx durch thermische Desorption aus dem NOx-Speicher 4. Zugleich wird mit dem Abgasschaltventil 3 ein Bypass 5 zum Umgehen des NOx-Speichers 4 in eine Schaltstellung geschaltet, in der der größere Teil des Abgases um den NOx-Speicher 4 herum in das Abgasendrohr 6 geleitet wird. Zeitgleich wird ein Ventil 8, vorzugsweise ein Magnetventil, einer Rückführleitung 7 geöffnet, die stromabwärts des NOx-Speichers 4 beginnt und vor dem Katalysator 2 in den Abgasstrom einmündet. Die Rückführleitung 7 dient zur Rückführung des kleineren Teils des mittlerweile NOx-behafteten Abgasstroms durch den NOx-Speicher 4 zu einer Düse 9, vorzugsweise einer Venturi-Düse, unmittelbar vor dem Katalysator 2. Dadurch wird der kleinere, NOx-behaftete Teilstrom in den Abgasstrom vor den Katalysator 2 zurückgeführt und das freigesetzte NOx kann dann im Katalysator 2 umgewandelt werden.

Fig. 2 zeigt eine vereinfachte Ausführungsform der erfindungsgemäßen Abgasschaltung. Ein Motor 1 ist mit einem Abgassystem bestehend aus einem Katalysator 2 und einem NOx-Speicher 4 verbunden. Eine Rückführleitung 7 verbindet den Ausgang des NOx-Speichers 4 mit dem Eingang des Katalysators 2. In der Rückführleitung 7 ist ein Ventil 8, vorzugsweise ein Magnetventil, angeordnet. Die Einmündung der Rückführleitung 7 in die Abgasverbindung Motor 1 und Katalysator 2 geschieht mittel einer Düse 9, vorzugsweise einer Venturi-Düse. Die Abgasschaltung ist so ausgelegt, daß die Druckdifferenz $\Delta p_V$ in der Venturi-Düse größer ist als die partiellen Druckdifferenzen $\Delta p_K$ des Katalysators 2 und $\Delta p_N$ des NOx-Speichers 4. In einer Ungleichung ausgedrückt lautet diese Bedingung:

$$\Delta p_V > \Delta p_K + \Delta p_N$$

Bei der Desorption des NOx aus dem NOx-Speicher 4 wird das Ventil 8 geöffnet und ein Teil des Abgases hinter dem NOx-Speicher 4 wird durch die Rückführleitung 7 über die Venturi-Düse 9 in den Abgasstrom vor dem Katalysator 2 zurückgeführt. Der andere Teil des Abgases hinter dem NOx-Speicher 4 wird jedoch ohne Nachbehandlung in das Abgasendrohr 6 entlassen.

**BEZUGSZEICHENLISTE**

1 Motor
2 Katalysator
3 Abgasschaltventil
4 NOx-Speicher
5 Bypass
6 Abgasendrohr
7 Rückführleitung
8 Ventil
9 Düse

**Patentansprüche**

1. Verfahren zur NOx-Behandlung des Abgases einer mager betreibbaren Verbrennungskraftmaschine (1), insbesondere ein Mager-Otto-Motor, insbesondere Direkteinspritzer-Otto-Motor, wobei die Abgasbehandlungsanlage des Motors (1) einen NOx-Speicher (4) und einen davon unabhängigen Katalysator (2) aufweist,
wobei während des Magerbetriebs des Motors (1) das NOx in dem NOx-Speicher (4) gespeichert wird, und der Motor (1) zur Regeneration des NOx-Speichers (4) auf ein Kraftstoff-Luft-Verhältnis von ungefähr $\lambda = 1$ geschaltet wird, **dadurch gekennzeichnet, daß**
das durch die mit der Regeneration verbundene Temperaturerhöhung des Abgases freigesetzte NOx des NOx-Speichers (4) hinter dem NOx-Speicher (4) abgezweigt wird und das NOx-behaftete Abgas zumindest teilweise in den Katalysator (2) zurückgeführt wird, wobei der Katalysator (2) unmittelbar hinter dem Motor (1) und vor dem NOx-Speicher (4) angeordnet ist.

2. Verfahren nach Anspruch 1, **dadurch gekennzeichnet, daß** während der Regenerationsphase des NOx-Speichers (4) der größere Teil des Abgases um den NOx-Speicher (4) herum geleitet wird und der kleinere Teil des Abgases durch den NOx-Speicher strömt.

3. Vorrichtung zur NOx-Behandlung des Abgases eine Mager-Otto-Motors (1), wobei die Abgasbehandlungsanlage des Motors (1) aus einem NOx-Speicher (4) und einem davon unabhängigen Katalysator (2) besteht,
wobei der Katalysator (2) unmittelbar hinter dem Motor (1) angeordnet ist, **dadurch gekennzeichnet, daß**
der NOx-Speicher (4) stromabwärts des Katalysators (2) angeordnet ist, und die Vorrichtung eine Rückführleitung (7) aufweist, die stromabwärts des NOx-Speichers (4) während einer Regenerationsphase des NOx-Speichers (4) Abgas entnimmt und das NOx-behaftete Abgas zumindest teilweise in den Katalysator (2) zurückführt.

4. Vorrichtung nach Anspruch 3, **dadurch gekennzeichnet, daß** die Einkopplung des NOx-behafteten Abgases in den Katalysator (2) über eine Düse (9) erfolgt.

5. Vorrichtung nach Anspruch 4, **dadurch gekennzeichnet, daß** die Düse (9) eine Venturie-Düse ist.

6. Vorrichtung nach Anspruch 4 oder 5, **dadurch gekennzeichnet, daß** die Druckdifferenz $\Delta p_V$ in der Venturi-Düse (9) größer ist als die partiellen Druckdifferenzen $\Delta p_K$ des Katalysators (2) und $\Delta p_N$ des NOx-Speichers (4).

7. Vorrichtung nach einem der Ansprüche 3 - 5, **dadurch gekennzeichnet, daß** die Vorrichtung einen Bypass (5) aufweist, der während der Regenerationsphase des NOx-Speichers (4) das Abgas teilweise um den NOx-Speicher (4) herum leitet.

8. Vorrichtung nach Anspruch 7, **dadurch gekennzeichnet, daß** der Bypass (5) ein Abgasschaltventil (3) aufweist, das In der Regenerationsphase den größeren Teil des Abgases in den Bypass (5) zur Umgehung des NOx-Speichers (4) und den kleineren Teil des Abgases in den NOx-Speicher (4) leitet.

9. Vorrichtung nach einem der Ansprüche 7 oder 8, **dadurch gekennzeichnet, daß** die Rückführleitung (7) ein Ventil (8) aufweist.

**Claims**

1. Method for treating the NOx in the exhaust gas from an internal-combustion engine (1) which can be operated under lean-burn conditions, in particular a lean-burn spark-ignition engine, in particular a direct injection spark-ignition engine, the exhaust-gas treatment installation of the engine (1) having an NOx store (4) and a catalytic converter (2) which is independent thereof,
the NOx being stored in the NOx store (4) during lean-burn operation of the engine (1),
and the engine (1) being switched to a fuel-air ratio of approximately $\lambda = 1$ in order for the NOx store (4) to be regenerated, **characterized in that**
the NOx from the NOx store (4) which is released as a result of the increase in temperature of the exhaust gas associated with the regeneration is branched off downstream of the NOx store (4), and at least part of the NOx-laden exhaust gas is returned to the catalytic converter (2), the catalytic converter (2) being arranged directly downstream of the engine (1) and upstream of the NOx store (4).

2. Method according to Claim 1, **characterized in that** during the phase of regeneration of the NOx store (4), the majority of the exhaust gas is made to bypass the NOx store (4), and the minority of the exhaust gas flows through the NOx store.

3. Device for treating the NOx in the exhaust gas from a lean-burn spark-ignition engine (1), the exhaust-gas treatment installation of the engine (1) comprising an NOx store (4) and a catalytic converter (2) which is independent thereof,
the catalytic converter (2) being arranged directly downstream of the engine (1), **characterized in**

**that**
the NOx store (4) is arranged downstream of the catalytic converter (2), and the device has a recirculation line (7) which removes exhaust gas downstream of the NOx store (4) during a phase in which the NOx store (4) is being regenerated, and at least part of the NOx-laden exhaust gas is returned to the catalytic converter (2).

4. Device according to Claim 3, **characterized in that** the NOx-laden exhaust gas is introduced into the catalytic converter (2) by means of a nozzle (9).

5. Device according to Claim 4, **characterized in that** the nozzle (9) is a Venturi nozzle.

6. Device according to Claim 4 or 5, **characterized in that** the pressure difference $\Delta p_V$ in the Venturi nozzle (9) is greater than the partial pressure differences $\Delta p_K$ of the catalytic converter (2) and $\Delta p_N$ of the NOx store (4).

7. Device according to one of Claims 3 to 5, **characterized in that** the device has a bypass (5) which, during the phase of regeneration of the NOx store (4), causes the exhaust gas to at least partially bypass the NOx store (4).

8. Device according to Claim 7, **characterized in that** the bypass (5) has an exhaust-gas switching valve (3) which in the regeneration phase guides the majority of the exhaust gas into the bypass (5) in order for it to avoid the NOx store (4) and the minority of the exhaust gas into the NOx store (4).

9. Device according to one of Claims 7 or 8, **characterized in that** the recirculation line (7) has a valve (8).

## Revendications

1. Procédé pour le traitement de $NO_x$ du gaz d'échappement d'un moteur à combustion interne (1) pouvant fonctionner avec un mélange pauvre, en particulier un moteur Otto fonctionnant avec un mélange pauvre, en particulier un moteur Otto à injection directe, l'installation de traitement du gaz d'échappement du moteur (1) présentant un accumulateur de $NO_x$ (4) et un catalyseur (2) indépendant de celui-ci, le $NO_x$ étant accumulé dans l'accumulateur de $NO_x$ (4) pendant le fonctionnement avec un mélange pauvre du moteur (1) et le moteur (1) étant raccordé de façon à avoir un rapport carburant-air d'environ $\lambda=1$ pour la régénération de l'accumulateur de $NO_x$ (4), **caractérisé en ce que** le $NO_x$ de l'accumulateur de $NO_x$ (4), libéré par l'augmentation de température du gaz d'échappement liée à la régénération, est dérivé en aval de l'accumulateur de $NO_x$ (4) et le gaz d'échappement chargé de $NO_x$ est ramené au moins partiellement dans le catalyseur (2), le catalyseur (2) étant disposé directement en aval du moteur (1) et en amont de l'accumulateur de $NO_x$ (4).

2. Procédé selon la revendication 1, **caractérisé en ce que**, pendant la phase de régénération de l'accumulateur de $NO_x$ (4), la plus grande partie du gaz d'échappement est guidée en contournant l'accumulateur de $NO_x$ (4) et la plus petite partie du gaz d'échappement s'écoule à travers l'accumulateur de $NO_x$.

3. Dispositif pour le traitement de $NO_x$ du gaz d'échappement d'un moteur Otto (1) fonctionnant avec un mélange pauvre, l'installation de traitement du gaz d'échappement du moteur (1) étant constituée d'un accumulateur de $NO_x$ (4) et d'un catalyseur (2) indépendant de celui-ci, le catalyseur (2) étant disposé directement en aval du moteur (1), l'accumulateur de $NO_x$ (4) étant disposé en aval du catalyseur (2) et le dispositif présentant une conduite de retour (7), qui soutire du gaz d'échappement en aval de l'accumulateur de $NO_x$ (4) pendant une phase de régénération de l'accumulateur de $NO_x$ (4) et qui ramène le gaz d'échappement chargé de $NO_x$ au moins partiellement dans le catalyseur (2).

4. Dispositif selon la revendication 3, **caractérisé en ce que** l'injection du gaz d'échappement chargé de $NO_x$ dans le catalyseur (2) est réalisée via une tuyère (9).

5. Dispositif selon la revendication 4, **caractérisé en ce que** la tuyère (9) est un tube de Venturi.

6. Dispositif selon les revendications 4 ou 5, **caractérisé en ce que** la différence de pression $\Delta p_V$ dans le tube de Venturi (9) est supérieure aux différences de pressions partielles $\Delta p_K$ du catalyseur (2) et $\Delta p_N$ de l'accumulateur de $NO_x$ (4).

7. Dispositif selon l'une quelconque des revendications 3 à 5, **caractérisé en ce que** le dispositif présente une dérivation (5), qui guide, pendant la phase de régénération de l'accumulateur de $NO_x$ (4), le gaz d'échappement partiellement autour de l'accumulateur de $NO_x$ (4).

8. Dispositif selon la revendication 7, **caractérisé en ce que** la dérivation (5) présente une soupape de commutation (3) du gaz d'échappement qui guide, pendant la phase de régénération, la plus grande partie du gaz d'échappement dans la dérivation (5) pour contourner l'accumulateur de $NO_x$ (4) et la plus petite partie du gaz d'échappement dans l'accumu-

lateur de $NO_x$ (4).

9.  Dispositif selon l'une quelconque des revendications 7 ou 8, **caractérisé en ce que** la conduite de retour (7) présente une soupape (8).

FIG. 1

FIG. 2

FIG. 3

EP 0 957 243 B1